# EUROPEAN PATENT APPLICATION

(11) **EP 2 476 899 A1**
(43) Date of publication of application: **18.07.2012**
(21) Application number: 11151133.3
(22) Date of filing: 17.01.2011
(51) Int. Cl.: F03D 1/06, F03D 11/00, F03D 11/04

(54) **Wind turbine blade bearing**

(71) Applicant: SIEMENS AKTIENGESELLSCHAFT, 80333 München (DE)
(72) Inventor: Elmose, Soeren Forbech, 7430 Ikast (DK); Hansson, Martin, 8740 Braedstrup (DK); Laursen, Christian, 8722 Hedensted (DK); Poulsen, Steffen Frydendal, 8600 Silkeborg (DK); Shukla, Akhilesh, 7330 Brande (DK)

(57) **Abstract**

A wind turbine blade bearing (20) is disclosed. It comprises a first ring (10) being connectable to a wind turbine rotor blade (5), a second ring (11) being connectable to a hub (4), and a number of elements (17) for transferring forces between the first ring (10) and the second ring (11). The second ring (11) comprises a number of shear pins (18) for additionally connecting the second ring (11) to the hub (4).

## Description

The present invention relates to a wind turbine blade bearing, a wind turbine hub and a wind turbine.

The blade bearings on wind turbines consist of an outer ring, an inner ring and balls to transfer forces from the inner ring to the outer ring. During loading of the blade, the balls generate an axial and a radial force component. The axial component transfers the bending moment from inner ring to outer ring. The radial component is undesirable, but unavoidable as the balls contact the rings in a certain angle. The radial component will push sideways on the outer ring, and cause it to slide on the hub. To avoid sliding pre-stressed bolts are used, and the surfaces are rough. This has until recently been sufficient to avoid sliding, but as rotor diameters increase, it is no longer a feasible solution to solve the problem with pre-stressed bolts. On the current rotor diameters, the problem has not yet been severe.

Therefore, it is a first objective of the present invention to provide an advantageous wind turbine blade bearing. It is a second objective to provide an advantageous wind turbine hub. A third objective of the present invention is to provide an advantageous wind turbine.

The first objective is solved by a wind turbine blade bearing as claimed in claim 1. The second objective is solved by a wind turbine hub as claimed in claim 10. The third objective is solved by a wind turbine as claimed in claim 11. The depending claims define further developments of the invention.

The inventive wind turbine blade bearing comprises a first ring and a second ring. The first ring is connectable to a wind turbine rotor blade. The second ring is connectable to a hub. The inventive wind turbine blade bearing further comprises a number of elements for transferring forces between the first ring and the second ring. The second ring comprises a number a shear pins for additionally connecting the second ring to the hub. The second ring may further comprise a number of bolts for connecting the second ring to the hub.

By the introduction of a number of shear pins in the most critical area of the surface, the sliding can be completely avoided. The use of pre-stressed bolts may still be required as the joint is also loaded in tension. The shear pins may be located in between the boltholes, and may be manufactured to very tight tolerances.

The elements for transferring forces between the first ring and the second ring may, for example, be balls. Moreover, the first ring can be at least partly located inside of the second ring. In this case the first ring is an inner ring and the second ring is an outer ring.

Preferably, the second ring may be pre-stressed to the hub, for example by means of the bolts. Moreover, the second ring may comprise a number of bolt holes. The bolt holes can be located along the circumference of the second ring. Each shear pin can be located in between two bolt holes.

Advantageously, the inventive wind turbine blade bearing comprises a combination of pre-stressed bolts and a limited number of shear pins located at the most critical area. Due to production tolerances, it is currently not practically possible to use shear pins on the entire circumference. Hence, the shear pins can be located at a portion of the circumference of the second ring which covers up to one third of the circumference of the second ring. Advantageously, the shear pins can be located at a portion of the circumference of the second ring which covers up to one fourth of the circumference of the second ring. Preferably, the shear pins are located at a portion of the circumference of the second ring which covers up to one fifth of the circumference of the second ring. The inventive wind turbine hub comprises a wind turbine blade bearing as previously described. The inventive wind turbine comprises an inventive hub or an inventive wind turbine blade bearing as previously described.

Generally, the present invention has the advantage, that it provides a blade bearing which effectively avoids sliding between the outer ring and the hub and which can be applied for high rotor diameters.

Further features, properties and advantages of the present invention will become clear from the following description of an embodiment in conjunction with the accompanying drawings.
- Figure 1: schematically shows a wind turbine.
- Figure 2: schematically shows part of a hub and part of a rotor blade in a perspective view.
- Figure 3: schematically shows an inventive wind turbine blade bearing in a sectional view.
- Figure 4: schematically shows the blade bearing in a top view.

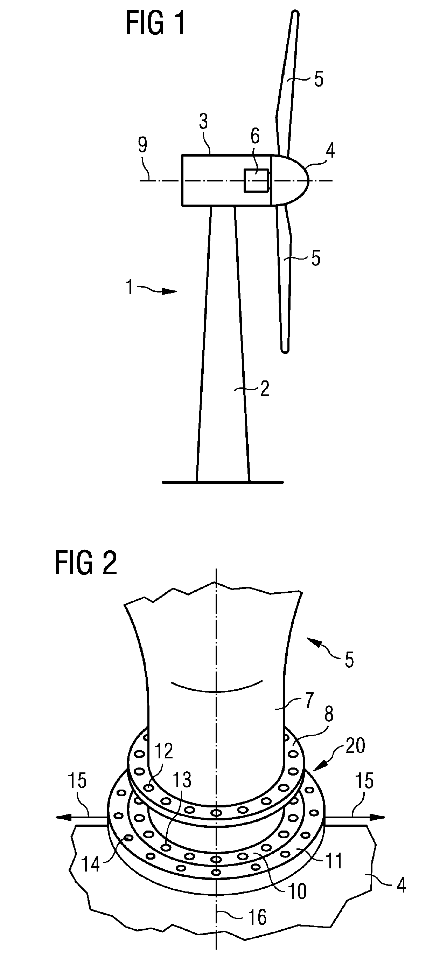

An embodiment of the present invention will now be described with reference to Figures 1 to 4.
Figure 1 schematically shows a wind turbine 1. The wind turbine 1 comprises a tower 2, a nacelle 3 and a hub 4. The nacelle 3 is located on top of the tower 2. The hub 4 comprises a number of wind turbine blades 5. The hub 4 is mounted to the nacelle 3. Moreover, the hub 4 is pivot-mounted such that it is able to rotate about a rotation axis 9. A generator 6 is located inside the nacelle 3. The wind turbine 1 is a direct drive wind turbine.
Figure 2 schematically shows part of the hub 4 and part of a rotor blade 5 in a perspective view. The rotor blade 5 comprises a root portion 7. The root portion 7 comprises a flange 8. The flange 8 comprises a number of bolt holes 12.

The rotor blade 5 can be connected to the hub 4 by means of the flange 8 and by means of the blade bearing 20.

The inventive wind turbine blade bearing 20 comprises an inner ring 10 and an outer ring 11. The outer ring 11 comprises a number of bolt holes 14. The outer ring 11 is connected to the hub 4, for example by means of the bolt holes 14. For example, the outer ring 11 can be bolted or screwed to the hub 4.

The inner ring 10 comprises a number of bolt holes 13. The rotor blade 5 can be connected, for example bolted or screwed, to the inner ring 10 by means of the bolt holes 13 and corresponding bolt holes 12 of the flange 8. The centre line of the root portion 7 and of the blade bearing 20 is designated by reference numeral 16. The inner ring 10 is located radially inside of the outer ring 11 referring to the centre line 16.

To allow for a rotation of the rotor blade 5 about the centre line 16 the inventive blade bearing is constructed as ball bearing. The balls are located between the inner ring 10 and the outer ring 11 and are not shown in Figure 2. The radial forces acting on the outer ring 11 due to forces transferred from the rotor blade 5 via the inner ring 10 and the balls are designated by reference numeral 15. The radial forces 15 may cause the outer ring 11 to slide on a surface of the hub 4. To avoid this, the inventive blade bearing 20 comprises a number of shear pins 18 which are located between the outer ring 11 and the hub 4.

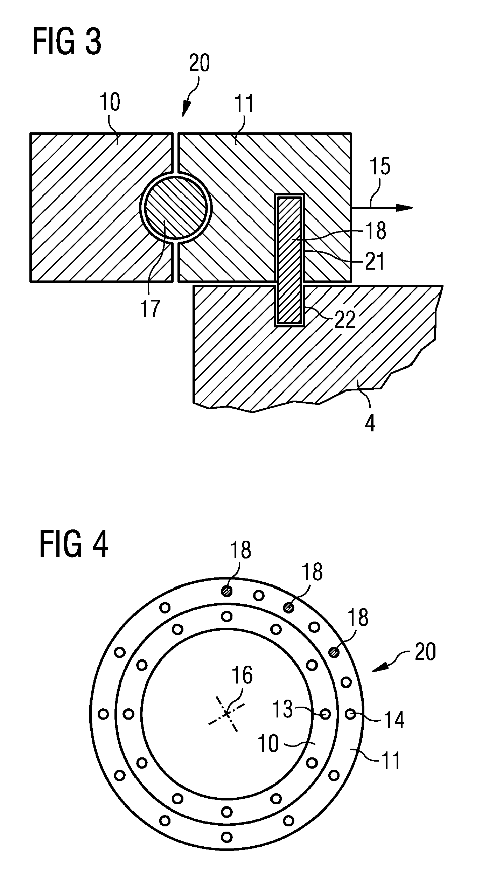

Figure 3 schematically shows part of the inventive blade bearing 20 in a sectional view. The balls 17 are located between the inner ring 10 and the outer ring 11. The outer ring 11 comprises a number of openings 21. Preferably, each opening 21 is located between two bolt holes 14. The hub 4 comprises a number of openings 22 corresponding to the openings 21 of the outer ring 11. The openings 22 of the hub and the openings 21 of the outer ring 11 are facing each other.

A number of shear pins 18 are located in the openings 21 of the outer ring 11 and in the openings 22 of the hub. When the radial force 15 exceeds a predefined value, the shear pin 18 breaks and prevents further damages.

Preferably, the outer ring 11 is pre-stressed to the hub 4, for example by means of bolts or screws.

Figure 4 schematically shows the blade bearing 20 in a top view. Preferably, the shear pins 18 are only located at the most critical portion. Therefore, in figure 4 the portion which is equipped with shear pins 18 covers only one fourth of the whole circumference of the outer ring 11. Alternatively, the portion of the outer ring 11 which is equipped with shear pins 18 may cover only one fifth of the whole circumference or may cover up to one third of the whole circumference of the outer ring 11.

## Claims

1. A wind turbine blade bearing (20) comprising a first ring (10) being connectable to a wind turbine rotor blade (5), a second ring (11) being connectable to a hub (4), and a number of elements (17) for transferring forces between the first ring (10) and the second ring (11),
**characterised in that**
the second ring (11) comprises a number of shear pins (18) for additionally connecting the second ring (11) to the hub (4) .

2. The wind turbine blade bearing (20) as claimed in claim 1, **characterised in that**
the second ring (11) comprises a number of bolts for connecting the second ring (11) to the hub (4).

3. The wind turbine blade bearing (20) as claimed in claim 1 or claim 2,
**characterised in that**
the first ring (10) is at least partly located inside of the second ring (11).

4. The wind turbine blade bearing (20) as claimed in any of the claims 1 to claim 3,
**characterised in that**
the second ring (11) is pre-stressed to the hub (4).

5. The wind turbine blade bearing (20) as claimed in claim 4, **characterised in that**
the second ring (11) is pre-stressed to the hub (4) by means of the bolts.

6. The wind turbine blade bearing (20) as claimed in any of the claims 1 to 5,
**characterised in that**
the second ring (11) comprises a number of bolt holes (14) located along the circumference of the second ring (11) and each shear pin (18) is located in between two bolt holes (14) .

7. The wind turbine blade bearing (20) as claimed in any of the claims 1 to 6,
**characterised in that**
the shear pins (18) are located at a portion of the circumference of the second ring (11) which covers up to one third of the circumference of the second ring (11).

8. The wind turbine blade bearing (20) as claimed in claim 7, **characterised in that**
the shear pins (18) are located at a portion of the circumference of the second ring (11) which covers up to one fourth of the circumference of the second ring (11).

9. The wind turbine blade bearing (20) as claimed in claim 8, **characterised in that**
the shear pins (18) are located at a portion of the circumference of the second ring (11) which covers up to one fifth of the circumference of the second ring (11).

10. A wind turbine hub (4) comprising a wind turbine blade bearing (20) as claimed in any of the claims 1 to 9.

11. A wind turbine (1) comprising a wind turbine blade bearing (20) as claimed in any of the claims 1 to 9 or a wind turbine hub (4) as claimed in claim 10.
